# EUROPEAN PATENT APPLICATION

(11) **EP 4 410 562 A1**
(43) Date of publication of application: **07.08.2024**
(21) Application number: 22875897.5
(22) Date of filing: 16.09.2022
(51) Int. Cl.: B41M 1/30, B41M 1/04, C09D 11/101

(54) **METHOD FOR MANUFACTURING PRINTED MATTER**

(30) Priority: 30.09.2021 JP 2021160478
(71) Applicant: Toray Industries, Inc., Tokyo 103-8666 (JP)
(72) Inventor: TSUJI, Yuichi, Otsu-shi, Shiga 520-8558 (JP); INOUE, Takejiro, Otsu-shi, Shiga 520-8558 (JP)
(74) Representative: Kador & Partner Part mbB
(86) International application number: PCT/JP2022/034765
(87) International publication number: WO 2023/054026

(57) **Abstract**

An object of the present invention is to provide a method for producing a surface-printing printed material excellent in not only wet-on-wet printability but also density stability. The present invention is a method for producing a printed material, including, in the stated order: an ink (A) transfer step of transferring an ink (A) according to the following definition to a substrate, the ink (A) being colorless or white; a drying step of evaporating water or a solvent contained in the ink (A); an ink (B) transfer step of transferring an ink (B) according to the following definition to the substrate; and an irradiation step of irradiating the transferred inks with an active energy ray: the ink (A) being a volatile active energy ray-curable ink containing water or a solvent, the ink (B) being a nonvolatile active energy ray-curable ink substantially not containing water or a solvent.

## Description

### TECHNICAL FIELD

The present invention relates to a method for producing a printed material.

### BACKGROUND ART

From the viewpoint of content protection and for the purpose of preventing loss of packaging during transportation and storage, demand for flexible packaging used for packaging mainly for food and daily necessities is expected to continue to grow with the increase in the global population. In general, in flexible packaging, after printing on a plastic film as a substrate, lamination treatment of bonding a printed material and a sealant with an adhesive is performed, and then the resultant product is processed into a bag shape (bag production).

In general, a laminate obtained by combining various films such as polyolefin, polyester, and polyamide is used as a packaging material depending on the functionality required after bag production such as strength and heat resistance. In recent years, the recyclability of packaging materials has been required due to an increase in environmental awareness, and monomaterials composed only of the same type of film materials have attracted attention.

Since a printed image after bag production can be seen from the back side of the substrate, back printing is performed in which a mirror image is printed on the substrate film. In the back printing, since lamination processing is performed after printing at all times, an aging step after the lamination processing cannot be omitted, and a processing and filling step cannot be immediately performed after the printing.

On the other hand, the surface-printing printed material in which the printed surface is on the front side in the bag production is required to have durability on the printed surface itself, but does not require lamination treatment after printing, and thus has advantages of short delivery and low cost.

In gravure printing, which is currently the mainstream in flexible packaging printing, a printed material with a vivid appearance can be obtained. However, because ink containing a large amount of solvent is used, a large amount of energy is required for drying of ink solvent and exhaust treatment, thus causing a heavy environmental load. In general, since different inks adjusted to film strength and lamination suitability corresponding to respective characteristics are used in the back printing and the surface printing, one ink adjusted according to respective characteristics cannot be used in both the back printing and the surface printing.

In recent years, attempts have been made to perform EB flexographic printing or EB offset printing, in which ink is cured by irradiation with an active energy ray, particularly an electron beam (EB), by flexible packaging printing (Patent Documents 1 and 2). In general, in the flexible packaging printing, roll-to-roll printing is performed, and hence the quick-drying property of the ink is important. In addition to environmental advantages due to the ink containing almost no solvent, active energy ray-curable printing has energy saving and high productivity because a drying step is shortened while no heat energy is used. Curing by electron beam irradiation is excellent in permeability, and a photopolymerization initiator in the ink is unnecessary, so that the risk of odor of the printed material and migration of an initiator decomposition component to contents is reduced, and the curing is also excellent in terms of safety in content protection of flexible packaging. However, since an electron beam irradiation facility is more expensive and larger in size than an ultraviolet irradiation facility, the electron beam irradiation facility is not installed on each printing cylinder as in the ultraviolet irradiation facility, but is installed after the final printing cylinder to collectively cure the ink. Therefore, the printing process becomes wet-on-wet in which the uncured ink is applied.

According to the technique disclosed in Patent Document 3, a printing process for imparting wet-on-wet printability to an active energy ray-curable flexo ink is disclosed. According to this, after the pre-printing active energy ray-curable flexo ink is printed on a film, the film is brought into a gel state by drying, the post-printing active energy ray-curable flexo ink is printed, favorable trapping properties are maintained, colors are applied one on another, and finally curing is performed by EB irradiation.

### PRIOR ART DOCUMENTS

### PATENT DOCUMENTS

Patent Document 1: Japanese Patent Laid-open Publication No. 2004-358788
Patent Document 2: International Publication No. 2019/69736
Patent Document 3: Japanese Patent No. 5959855

### SUMMARY OF THE INVENTION

### PROBLEMS TO BE SOLVED BY THE INVENTION

However, in the technique disclosed in Patent Document 3, since a solvent that can be distilled off is contained in the ink for the purpose of imparting wet-on-wet printability, ink physical properties vary due to solvent volatilization during storage or in a printing machine in addition to drying. Therefore, in particular, the density in the process color is likely to fluctuate, and there is a problem regarding the continuous printing stability such as lack of the stability of density and halftone dot shape at the time of continuous printing, and large density variation in the same printed material surface.

Therefore, an object of the present invention is to provide a method for producing a surface-printing printed material excellent in not only wet-on-wet printability but also continuous printing stability.

### SOLUTIONS TO THE PROBLEMS

That is, the present invention is a method for producing a printed material, including, in the stated order: an ink (A) transfer step of transferring an ink (A) according to the following definition to a substrate, the ink (A) being colorless or white; a drying step of evaporating water or a solvent contained in the ink (A); an ink (B) transfer step of transferring an ink (B) according to the following definition to the substrate; and an irradiation step of irradiating the transferred inks with an active energy ray:
the ink (A) being a volatile active energy ray-curable ink containing water or a solvent,
the ink (B) being a nonvolatile active energy ray-curable ink substantially not containing water or a solvent.

### EFFECTS OF THE INVENTION

According to the method for producing a printed material in the present invention, surface printing excellent in wet-on-wet printability and density stability is possible. Moreover, the obtained printed material exhibits excellent opacity and scratch resistance.

### EMBODIMENTS OF THE INVENTION

Hereinafter, the present invention will be specifically described. In the present invention, "or more" means the same as or more than the numerical value indicated therein. Further, "or less" means the same as or less than the numerical value indicated therein. Moreover, " (meth)acrylate" is a generic term including acrylate and methacrylate.

The present invention is characterized by including, comprising, in the stated order: an ink (A) transfer step of transferring an ink (A) according to the following definition to a substrate, the ink (A) being colorless or white; a drying step of evaporating water or a solvent contained in the ink (A); an ink (B) transfer step of transferring an ink (B) according to the following definition to the substrate; and an irradiation step of irradiating the transferred inks with an active energy ray:
the ink (A) being a volatile active energy ray-curable ink containing water or a solvent,
the ink (B) being a nonvolatile active energy ray-curable ink substantially not containing water or a solvent.

In general, in the surface printing, a white ink or a colorless anchor coating ink that is printed on almost the entire surface of a substrate and becomes a base color of a printed image is important in fluidity in order to improve opacity (in the case of a white ink) of an appearance of the printed material and gloss.

In the printing by the wet-on-wet process, when the tackiness (viscosity, cohesive force) of the post-printing ink is not lower than that of the pre-printing ink, the printed pre-printing ink is peeled off in post-printing, and color mixing occurs. Therefore, tack balance adjustment between inks and high fluidity of white are in a trade-off relationship.

In the technique disclosed in Patent Document 3, when the solvent that can be distilled off is contained in the ink and drying is performed between cylinders, peeling in post-printing and color mixing are prevented, and wet-on-wet printability is realized. However, since each ink contains a solvent that can be distilled off, ink physical properties vary due to solvent volatilization during storage or in a printing machine other than during drying.

Since white as a base color is generally a solid image, the ink supply amount is large, and high density is required, the influence of variation in ink physical properties is small, but color inks such as process colors and spot colors other than white affect printing quality such as density and halftone dot shape, and thus it is desirable that the variation is small at the time of continuous printing.

In the method for producing a printed material of the present invention, white or colorless ink as a base color contains volatile water or solvent to have high fluidity, and a drying step is provided before post-printing to suppress peeling in post-printing and color mixing. In color inks such as post-printing process colors and spot colors, since a volatile component is substantially not contained, variation in ink physical properties including viscosity is small, the ink supply amount is less likely to vary during continuous printing, and stability of printing quality is improved.

### (Active energy ray-curable ink)

A preferred embodiment of the active energy ray-curable ink common to the ink (A) and the ink (B) will be described.

The active energy ray-curable ink in the present invention, that is, the ink (A) and/or the ink (B) preferably contains a (meth)acrylate having an alicyclic skeleton. By containing the (meth)acrylate having an alicyclic skeleton, the volume shrinkage during curing by irradiation with an active energy ray is reduced, and the adhesion of the ink cured film to the substrate is improved.

Examples of the (meth)acrylate having an alicyclic skeleton include isobornyl (meth)acrylate, norbornyl (meth)acrylate, norbornane-2-methanol (meth)acrylate, cyclohexyl (meth)acrylate, 1-adamantyl (meth)acrylate, 3-methyladamantane-2-yl (meth)acrylate, 3-ethyladamantane-2-yl (meth)acrylate, 9,9-bis[4-(meth)acryloyloxyethoxyphenyl]fluorene, 9,9-bis[4-(3-(meth)acryloyloxy-2-hydroxypropyloxy)phenyl]fluorene, tricyclopentenyl (meth)acrylate, tricyclopentenyloxy (meth)acrylate, tricyclodecane monomethylol (meth)acrylate, and dicyclopentadiene tricyclodecane dimethanol di(meth)acrylate.

In particular, the alicyclic skeleton is more preferably any one or more selected from a norbornane skeleton, an adamantane skeleton, a tricyclodecane skeleton, and a dicyclopentadiene skeleton because the volume shrinkage during curing is small and film physical properties such as scratch resistance of the cured film are favorable.

A monofunctional or polyfunctional (meth)acrylate having no alicyclic skeleton can also be used.

Examples of the monofunctional (meth)acrylate include hexyl (meth)acrylate, octyl (meth)acrylate, nonyl (meth)acrylate, dodecyl (meth)acrylate, stearyl (meth)acrylate, isostearyl (meth)acrylate, benzyl (meth)acrylate, hydroxyethyl (meth)acrylate, hydroxypropyl (meth)acrylate, hydroxybutyl (meth)acrylate, polyethylene glycol (meth)acrylate, methoxypolyethylene glycol (meth)acrylate, N-(2-hydroxyethyl)acrylamide, N-(2-hydroxyethyl)methacrylamide, N-(2-hydroxymethyl)acrylamide, N-(2-hydroxymethyl)methacrylamide, acryloylmorpholine, dimethylacrylamide, methoxymethylacrylamide, diethylacrylamide, and isopropylacrylamide.

Examples of the bifunctional (meth)acrylate include diethylene glycol di(meth)acrylate, triethylene glycol di(meth)acrylate, polyethylene glycol di(meth)acrylate, tripropylene glycol di(meth)acrylate, 1,3-butylene glycol di(meth)acrylate, neopentyl glycol di(meth)acrylate, trimethylolpropane di(meth)acrylate, glycerin di(meth)acrylate, pentaerythritol di(meth)acrylate, hexyl di(meth)acrylate, nonyl di(meth)acrylate, decane di(meth)acrylate, 4,4'-isopropylidenediphenol di(meth)acrylate, and ethylene oxide adducts, propylene oxide adducts, and tetraethylene oxide adducts thereof.

Examples of the trifunctional (meth)acrylate include trimethylolpropane tri(meth)acrylate, pentaerythritol tri(meth)acrylate, ditrimethylolpropane tri(meth)acrylate, glycerin tri(meth)acrylate, isocyanuric acid tri(meth)acrylate, and ethylene oxide adducts and propylene oxide adducts thereof.

Examples of the tetrafunctional (meth)acrylate include pentaerythritol tetra(meth)acrylate, ditrimethylolpropane tetra(meth)acrylate, diglycerin tetra(meth)acrylate, ethylene oxide adducts and propylene oxide adducts thereof.

Examples of the penta- or higher functional (meth)acrylate include dipentaerythritol penta(meth)acrylate, dipentaerythritol hexa(meth)acrylate, and ethylene oxide adducts and propylene oxide adducts thereof.

The active energy ray-curable ink in the present invention, that is, the ink (A) and/or the ink (B) preferably contains a resin. Examples of the resin include an acrylic resin, a urethane resin, and a phthalate resin, and a commercially available product may be used, or a synthetic product may be used.

The acrylic resin can be obtained by performing a polymerization reaction in an organic solvent in the presence of a polymerization initiator by mixing one kind or two or more kinds of (meth)acrylate monomers. The acrylic resin can also be obtained by copolymerizing styrene, α-methyl-styrene, or the like.

Examples of commercially available products of the acrylic resin include "HIROS" (registered trademark) series manufactured by SEIKO PMC CORPORATION.

The urethane resin can be obtained by mixing one or more polyols and one or more polyisocyanates and performing a polycondensation reaction in an organic solvent in the presence of a condensing agent. Examples of the polyol include polyester polyols, polycarbonate polyols, and polyether polyols, and examples of the polyisocyanate include polyurethane polyisocyanates and isocyanurates.

The phthalate resin can be obtained by performing a polymerization reaction in an organic solvent in the presence of a polymerization initiator by mixing diallyl orthophthalate or diallyl isophthalate alone or in combination of two.

Examples of commercially available products of the phthalate resin include "DAISO DAP" (registered trademark) series and "DAISO ISO DAP" (registered trademark) manufactured by OSAKA SODA CO., LTD.

Examples of the pigment contained in the active energy ray-curable ink in the present invention include a phthalocyanine-based pigment, a soluble azo-based pigment, an insoluble azo-based pigment, a lake pigment, a quinacridone-based pigment, an isoindoline-based pigment, a threne-based pigment, a metal complex-based pigment, titanium oxide, zinc oxide, alumina white, calcium carbonate, barium sulfate, red iron oxide, cadmium red, yellow lead, zinc yellow, dark blue, ultramarine blue, oxide-coated glass powder, oxide-coated mica, oxide-coated metal particles, aluminum powder, gold powder, silver powder, copper powder, zinc powder, stainless steel powder, nickel powder, organic bentonite, iron oxide, carbon black, and graphite.

Mica (hydrous aluminum potassium silicate), talc (magnesium silicate salt), and the like, which are colorless extender pigments, can also be used, and the active energy ray-curable ink in the present invention can also be anchor coating ink containing no color pigment or an overprint varnish.

The active energy ray-curable ink in the present invention, that is, the ink (A) and/or the ink (B) preferably contains wax. When the active energy ray-curable ink contains wax, scratch resistance and slippage of a cured film are improved.

Examples of the wax include natural waxes such as carnauba wax, wood wax, montan wax, and lanolin, and synthetic waxes such as hydrocarbon-based wax, polytetrafluoroethylene wax, polyamide wax, and a silicone compound. Among them, the hydrocarbon-based wax is preferable because it is excellent in scratch resistance.

Examples of the hydrocarbon wax include Fischer-Tropswax, polyethylene wax, polypropylene wax, paraffin wax, and microcrystalline wax. These waxes can be used singly or in combination of two or more kinds thereof.

The content of the wax in the ink (A) or the ink (B) is preferably 0.1% by mass or more and 10% by mass or less. When the content of the wax is 0.1% by mass or more, more preferably 0.5% by mass or more, still more preferably 1% by mass or more, scratch resistance and slippage are improved. When the content of the wax is 10% by mass or less, more preferably 5% by mass or less, still more preferably 3% by mass or less, the wax is favorably dispersed and fluidity is improved.

The active energy ray-curable ink in the present invention, that is, the ink (A) and/or the ink (B) may contain other additives, for example, additives such as a photopolymerization initiator, a pigment dispersant, an anti-foaming agent, and a leveling agent.

However, the active energy ray-curable ink in the present invention may be an ultraviolet ray-curable ink containing a photopolymerization initiator, but from the viewpoint of reducing the environmental burden, a radiation-curable ink containing no photopolymerization initiator is more preferable.

As the active energy ray-curable ink in the present invention, either a flexo ink or an offset ink can be used. As the offset ink, ink for waterless lithographic printing may be used.

In the case of synthesizing the active energy ray-curable ink in the present invention, the active energy ray-curable ink can be synthesized by adding a pigment and an auxiliary agent to a resin varnish obtained by dissolving a resin in monofunctional and polyfunctional (meth)acrylates, dispersing and mixing the mixture using a three-roll mill in the case of an offset ink, or using an attritor, a ball mill, a sand mill, or the like in the case of a flexo ink.

### (Ink (A))

The ink (A) is a volatile active energy ray-curable ink containing water or a solvent.

Examples of the solvent in the ink (A) include ethanol, 1-propanol, 2-propanol, 1-butanol, 2-butanol, methyl ethyl ketone, ethyl acetate, propyl acetate, butyl acetate, amyl acetate, propyl propionate, butyl propionate, ethylene glycol, ethylene glycol monomethyl ether, ethylene glycol dimethyl ether, ethylene glycol monomethyl ether acetate, propylene glycol monomethyl ether, propylene glycol dimethyl ether, and propylene glycol monomethyl ether acetate. The solvent may be used singly or in combination of two or more kinds thereof. Water and a solvent may be used in combination.

The ink (A) preferably contains water or a solvent having a boiling point at 1 atm of 150°C or less. When the boiling point of the water or the solvent is 150°C or less, more preferably 120°C or less, appropriate quick-drying property is imparted. When the water or the solvent is instantaneously dried in the subsequent drying step, peeling with the post-printing ink (B) and color mixing can be suppressed.

The content of the water and/or the solvent in the ink (A) is preferably 10% by mass or more and 50% by mass or less in total of the water and the solvent. When the content is 10% by mass or more, more preferably 20% by mass or more, peeling with the post-printing ink (A) after the drying step and color mixing are suppressed. When the content is 50% by mass or less, more preferably 40% by mass or less, quick-drying property by the drying step is imparted.

A viscosity η_{A} at 25°C and a rotation speed of 0.5 rpm of the ink (A) as measured according to "Viscosity measuring method with a coaxial double-cylinder rotational viscometer" of JIS Z 8803:2011 is preferably 0.1 Pa·s or more and 5 Pa·s or less. When η_{A} is 0.1 Pa·s or more and 5 Pa·s or less, more preferably 0.5 Pa·s or more and 2 Pa·s or less, the fluidity of the ink that becomes a colorless or white base color becomes favorable.

As described above, as the active energy ray-curable ink in the present invention, either a flexo ink or an offset ink can be used, but as the ink (A), it is particularly preferable to use a flexo ink which has a low viscosity and may contain water or a solvent.

Examples of commercially available volatile electron beam-curable flexo inks include "Wetflex" manufactured by Sun Chemical and "Gelflex" manufactured by SAKATA INX CORPORATION.

### (Ink (B))

The ink (B) is a nonvolatile active energy ray-curable ink substantially not containing water or a solvent. The phrase "substantially not containing water or a solvent" means that the total content of the water and the solvent in the ink is 0.5% by mass or less.

A viscosity η_{B} at 25°C and a rotation speed of 0.5 rpm of the ink (B) as measured according to "Viscosity measuring method with a coaxial double-cylinder rotational viscometer" of JIS Z 8803:2011 is preferably 20 Pa·s or more and 200 Pa·s or less. When η_{B} is 20 Pa·s or more and 200 Pa·s or less, more preferably 40 Pa·s or more and 100 Pa·s or less, variation in physical properties of a color ink such as a process color or a spot color during printing can be suppressed to be small.

When η_{A} and η_{B} are within the respective preferred ranges, tack between inks is balanced, and continuous printing stability is improved, which is preferable.

As described above, as the active energy ray-curable ink in the present invention, either a flexo ink or an offset ink can be used, but as the ink (B), it is particularly preferable to use an offset ink which has a high viscosity and contains no volatile component.

Examples of commercially available nonvolatile electron beam-curable offset inks include "Sun Beam" manufactured by Sun Chemical and "XCURA EVO" manufactured by Flint Group.

### (Printing machine)

In the method for producing a printed material of the present invention, a central drum type printing machine is preferably used. The central drum type refers to a single impression drum that faces a cylinder for transferring ink and an impression cylinder and sandwiches a material to be printed with the cylinder and the impression cylinder. The central drum type printing machine is suitable for a wet-on-wet printing process because a guide roll is not required for film conveyance between cylinders.

Specific examples of the central drum type printing machine include "MIRAFLEX" manufactured by Windmoeller & Hoelscher and "ONYX XS" manufactured by UTECO as a commercially available product of a flexographic printing machine, and "CI-8" manufactured by Comexi Group as a commercially available product of an offset printing machine.

### (Substrate)

In the method for producing a printed material of the present invention, as the substrate, a non-absorbent material such as a metal or a film is preferably used.

Examples of the film include polyesters such as polyethylene, polypropylene, polyethylene terephthalate, polybutylene terephthalate, and polylactic acid, polyamide, polyimide, polyalkyl (meth)acrylate, polystyrene, poly-α-methylstyrene, polycarbonate, polyvinyl alcohol, polyvinyl acetal, polyvinyl chloride, and polyvinylidene fluoride. Among them, from the viewpoint of recyclability, it is preferable to use a single type of polyethylene or polypropylene, or a laminate thereof.

The film may be subjected to surface treatment such as burning treatment, adhesion-improving coating, and chemical vapor deposition.

The thickness of the substrate is preferably 5 um or more and 50 um or less. By setting the thickness of the substrate to 5 um or more, preferably 10 um or more, the mechanical strength of the substrate necessary for printing can be effectively obtained. By setting the thickness of the substrate to 50 um or less, preferably 30 um or less, the cost of the substrate can be suppressed at low cost.

When the substrate is paper such as coated paper such as art paper, coated paper, and cast paper; non-coated paper such as high-quality paper, newspaper paper, and Japanese paper, synthetic paper, and aluminum deposited paper, a transparent ink may be used as the ink (A) instead of white ink.

The form of the substrate used in the method for producing a printed material of the present invention may be either a sheet form or a roll form. When printing is performed on a thin film for flexible packaging, it is preferable to use a roll film and perform roll-to-roll printing.

### (Transfer step)

In each transfer step, the ink is transferred to the transfer target surface of the substrate.

In general, a color printed material requires printing units for transferring ink in the number of colors to be printed. In the printing unit of each color, the ink of a printing portion is transferred from an anilox roll or an ink roll to the transfer target surface of a material to be printed through a printing plate or, depending on the method, a blanket.

In the transfer step, as a method for transferring an ink to the surface to be printed, flexographic printing is preferably used for a volatile ink having a low viscosity, and offset printing is preferably used for a nonvolatile ink having a high viscosity.

A printing method of the present invention includes, in a transfer step, an ink (A) transfer step of transferring an ink (A), which is colorless or white, to a substrate and an ink (B) transfer step of transferring an ink (B) to the substrate in this order.

For example, surface printing can be performed by previously transferring the white ink (A) to the substrate. When the surface printing is performed, the substrate itself can be separated from the cured ink layer and the packaging target even in flexible packaging in which foods and daily necessities are packaged, so that it is not necessary to bond a sealant.

### (Drying step)

In the method for producing a printed material of the present invention, water or a solvent contained in a volatile ink transferred to a substrate can be removed by air blowing of a hot air dryer or the like generally used in flexographic printing machines. When the volatile component is a compound containing a hydroxy group such as water, an IR dryer can also be used. As the volatile component is removed by the drying step, the volatile ink transferred to the substrate is brought into a semi-dry state, and the viscosity also greatly increases. As a result, the viscosity and cohesive force become higher than those of the ink in the post-printing cylinder, thereby suppressing peeling and color mixing.

In general, when the viscosity of the volatile ink is within the above range of η_{A} and the viscosity of the nonvolatile ink is within the above range of η_{B}, in normal wet-on-wet printing, the pre-printing volatile ink is peeled off and mixed with the nonvolatile ink having an overwhelmingly high viscosity in post-printing, and normal printing cannot be performed. However, by continuously printing the post-printing nonvolatile ink through the drying step of the volatile ink of the present invention, peeling with the ink in post-printing and color mixing are suppressed, and continuous printing with stable quality becomes possible.

### (Overprint varnish transfer step)

The method for producing a printed material of the present invention preferably includes a step (overprint varnish transfer step) of transferring an active energy ray-curable overprint varnish to the substrate to which the ink (A) and the ink (B) have been transferred, between the ink (B) transfer step and the irradiation step.

The active energy ray-curable overprint varnish plays a role of protecting the printed ink cured product, and improves the scratch resistance of the surface-printing printed material. Depending on the properties of the varnish, glossiness or matting can be imparted to the design of the printed material.

### (Irradiation step)

In the irradiation step, the transferred inks are irradiated with an active energy ray.

In the method for producing a printed material of the present invention, examples of the active energy ray source include ultraviolet rays (particularly, LED-UV), electron beams, gamma rays, and the like. Radiation, such as an electron beam and a gamma ray, generates high-energy secondary electrons in an irradiation substance, excites surrounding molecules, and generates reactive active species represented by radicals. When the substance to be irradiated is active energy ray-curable ink, radicals are generated in the ink, and radical polymerization proceeds to form a cured/ink film. In particular, an electron beam at a low acceleration voltage is preferably used because the electron beam has sufficient permeability with respect to a thickness of an ink film of 10 um or less, is given energy necessary for curing, does not require special qualification at the time of use, and is easy to handle.

Since the transmission depth of the electron beam is determined by an acceleration voltage, the acceleration voltage of the electron beam is preferably 50 kV or more, more preferably 90 kV or more, still more preferably 110 kV or more, which allows a sufficient dose of the electron beam to pass through the ink film. When the transmission depth increases, the dose given to the inside of the film also increases, and hence the transmission depth is preferably 300 kV or less, more preferably 200 kV or less, and still more preferably 150 kV or less.

As the irradiation dose of the electron beam is higher, the amount of radical species generated in the target substance increases, but the damage of the film also increases, and hence the irradiation dose is preferably 10 kGy or more and 100 kGy or less, and more preferably 20 kGy or more and 50 kGy or less.

### EXAMPLES

Hereinafter, the present invention will be specifically described with reference to Examples. However, the present invention is not limited thereto.

### <Measurement and evaluation methods>

### (1) Ink viscosity (η_{A}, η_{B})

The ink viscosity was measured according to "Viscosity measuring method with a coaxial double-cylinder rotational viscometer" of JIS Z 8803:2011. A cylinder spindle No. 4 was attached to a B-type viscometer (DV-II manufactured by Brookfield (BROOKFIELD)), and the ink viscosity was measured under the measurement conditions of 25°C and a rotation speed of 0.5 rpm.

### (2) Tack value

1.3 ml of the ink was applied to a roller of an inkometer ("INKOGRAPH" TYPE-V manufactured by TESTER SANGYO CO,. LTD.), the operation was performed at a roller temperature of 38°C and a rotation speed of 400 rpm, and a tack value after 1 minute was measured.

### (3) Printability

The printed material was observed and evaluated according to the following criteria.
A: Printing is color printing in which neither peeling of the ink nor color mixing is observed.
B: Slight peeling with the post-printing color ink of white ink or color mixing in which the color ink becomes slightly whitish is observed.
C: Peeling with the post-printing color ink of white ink or color mixing is observed.

### (4) Opacity

The opacity was measured using a reflection densitometer (eXact advance manufactured by X-Rite Incorporated) on a white solid portion of the printed material. The value of opacity is preferably 55% or more, and extremely preferably 60% or more.

### (5) Density stability

In continuous printing with a printing length of 4000 m, five samples were collected every 1000 m from the start of printing, and the density of the process color (CMYK) of each sample was measured. A difference between the maximum density value and the minimum density value in the five samples of each color was calculated, the largest value of the differences among the four colors was called the maximum density difference, and the value was recorded. Evaluation was performed according to the following criteria.
A: The maximum density difference is 0.1 or less.
B: The maximum density difference is more than 0.1 and 0.2 or less.
C: The maximum density difference is more than 0.2.

### (6) Removability of printed material

"Cellotape" (registered trademark) No. 405 (width: 18 mm) manufactured by NICHIBAN Co., Ltd. was attached to a randomly extracted range of 30 mm × 18 mm for a white solid portion of a printed material, and then the white solid portion was peeled off by hand and evaluation was performed according to the following criteria.
A: The ink film was not peeled off.
B: A part of the ink film was peeled off.

### (7) Scratch resistance of printed material

A randomly extracted range of 3 cm × 3 cm for a white solid portion of a printed material was rubbed back and forth 20 times with a human nail and evaluation was performed according to the following criteria.
A: No scratches due to nails were observed.
B: Partial peeling of the ink was observed along the nail mark.

### <Printing unit>

Any one of the following printing units was used as a printing unit corresponding to the first to fifth cylinders of a printing machine described below.

### (1) Flexographic printing unit

As a printing plate, AWP DEW manufactured by Asahi Kasei Corporation was used, and an image of a corresponding color was exposed and developed to make a plate. As an anilox roller, Nova Gold manufactured by Praxair Surface Technologies was used.

### (2) Offset printing unit

As a printing plate, a waterless lithographic printing plate (TAC-VT4 manufactured by Toray Industries, Inc.) was used, and an image of a corresponding color was exposed and developed to make a plate. As a rubber roller, 726-40 manufactured by Boetcher was used, and as a blanket, T414W manufactured by KINYOSHA CO., LTD. was used.

### <Printing method>

First, a configuration common to the following printing methods 1 to 5 will be described.

A white ink was set in the first cylinder, a black ink was set in the second cylinder, a cyan ink was set in the third cylinder, a magenta ink was set in the fourth cylinder, and a yellow ink was set in the fifth cylinder in order from the upstream side in a traveling direction of a printing substrate.

The same image was used in the printing methods 1 to 4, the solid part of the process color was set to a predetermined printing density (black: 1.7, cyan: 1.4, magenta: 1.3, yellow: 1.1) and then color printing of surface printing was performed on the substrate continuously for 4000 m at a printing speed of 200 m/min.

In the irradiation step, the ink was cured by electron beam irradiation at an acceleration voltage of 110 kV and an irradiation dose of 30 kGy to obtain a printed material.

### [Printing method 1]

In the printing method 1, a flexographic printing unit was installed in the first cylinder of a printing machine (CI-8 manufactured by Comexi Group), and the second to fifth cylinders were used as offset printing units. Hot air drying was performed only between the first cylinder and the second cylinder.

### [Printing method 2]

In the printing method 2, all of the first to fifth cylinders of a printing machine (ONYX XS manufactured by UTECO) were used as flexographic printing units, and hot air drying was performed between the cylinders.

### [Printing method 3]

In the printing method 3, all of the first to fifth cylinders of a printing machine (ONYX XS manufactured by UTECO) were used as flexographic printing units, and drying was performed between the cylinders.

### [Printing method 4]

In the printing method 4, all of the first to fifth cylinders of a printing machine (CI-8 manufactured by Comexi Group) were used as offset printing units, and drying was performed between the cylinders.

### [Printing method 5]

In the printing method 5, a flexographic printing unit was installed in the first cylinder and the eighth cylinder of a printing machine (CI-8 manufactured by Comexi Group), and the second to fifth cylinders were used as offset printing units. Hot air drying was performed only between the first cylinder and the second cylinder. An active energy ray-curable overprint varnish was set on the eighth cylinder.

### <Starting materials for ink>

### (Pigment and pigment dispersant)

White pigment: TIPAQUE CR57 (manufactured by ISHIHARA SANGYO KAISHA, LTD.)
Black pigment: MA-11 (manufactured by Mitsubishi Chemical Corporation)
Blue pigment: Lionol Blue FG7330 (manufactured by TOYOCOLOR CO., LTD.)
Red pigment: Lionol Red TT5701G (manufactured by TOYOCOLOR CO., LTD.)
Yellow pigment: Lionol Yellow TT1405G (manufactured by TOYOCOLOR CO., LTD.)
Extender pigment: A-11 (manufactured by YAMAGUCHI MICA CO., LTD.)
Pigment dispersant: "DISPERBYK" (registered trademark) 111 (manufactured by BYK Chemie Ltd. Japan).

### (Monomer)

Monomer 1: pentaerythritol triacrylate ("Miramer" (registered trademark) M340 manufactured by MIWON)
Monomer 2: ethylene oxide adduct of trimethylolpropane triacrylate ("Miramer" (registered trademark) M3190 manufactured by MIWON)
Monomer 3: (meth)acrylate having an alicyclic skeleton, tricyclodecane dimethanol diacrylate ("Miramer" (registered trademark) M262 manufactured by MIWON)
Monomer 4: 1,6-hexanediol diacrylate ("NK ESTER" (registered trademark) A-HD-N manufactured by Shin-Nakamura Chemical CO., LTD).

### (Oligomer)

Oligomer: urethane acrylate (UF-8001G manufactured by KYOEISHA CHEMICAL Co., LTD.)

### (Acrylic resin)

Acrylic resin: acrylic resin by allowing carboxyl groups in a copolymer of 25% by mass of methyl methacrylate, 25% by mass of styrene, and 50% by mass of methacrylic acid to undergo addition reaction with 0.6 equivalents of glycidyl methacrylate (weight average molecular weight: 34,000, acid value: 102 mgKOH/g).

### (Polymerization inhibitor)

Polymerization inhibitor: p-methoxyphenol (manufactured by Wako Pure Chemical Industries, LTD).

### (Water and solvent)

Water: pure water (manufactured by Wako Pure Chemical Industries, Ltd.)
Solvent 1: 2-propanol (manufactured by Wako Pure Chemical Industries, Ltd.), boiling point: 83°C
Solvent 2: propylene glycol (manufactured by Wako Pure Chemical Industries, Ltd.), boiling point: 188°C.

### (Wax)

Wax: "KTL" (registered trademark) 4N (manufactured by KITAMURA LIMITED).

### <Preparation of ink>

The white ink having the formulation shown in Table 1 and the color inks of black, cyan, magenta, and yellow having the formulation shown in Table 2 were mixed while weighing the ink raw materials described below, by using a bead mill for the flexo ink and using a three-roll mill for the offset ink to prepare an ink.

### <Active energy ray-curable overprint varnish>

EB varnish: OPV EB UMatt UQ1601 manufactured by Sun Chemical.

### <Printing substrate>

Substrate 1: PET film (S-46 manufactured by Polyplex Corporation Ltd., thickness: 12 um)
Substrate 2: PE film (PE3K-H manufactured by Futamura Chemical Co., Ltd., thickness: 25 um)
Substrate 3: biaxially oriented polypropylene (OPP) film ("AlOx-Lyte" manufactured by Jindal Films, thickness: 20 µm).

**[Table 1]**

| | | White ink | | | | | | | |
|---|---|---|---|---|---|---|---|---|---|
| | | 1 | 2 | 3 | 4 | 5 | 6 | 7 | 8 |
| Composition (% by mass) | White pigment | 35.0 | 35.0 | 35.0 | 35.0 | 35.0 | 35.0 | 45.0 | 45.0 |
| | Extender pigment | - | - | - | - | - | - | 1.0 | 1.0 |
| | Pigment dispersant | 1.0 | 1. 0 | 1.0 | 1.0 | 1.0 | 1.0 | 1.0 | 1.0 |
| | Monomer 1 | - | - | - | - | - | - | 21.4 | 24.0 |
| | Monomer 2 | 35.9 | 45.9 | 35.9 | 35.9 | 25.9 | 48.0 | - | - |
| | Monomer 3 | - | - | - | - | 15.0 | - | 24.0 | 19.4 |
| | Monomer 4 | - | 5.0 | - | - | - | 7.9 | - | - |
| | Oligomer | 7.0 | 7.0 | 7.0 | 7.0 | 7.0 | 7.0 | - | - |
| | Acrylic resin | - | - | - | - | - | - | 6.5 | 8.5 |
| | Polymerization Inhibitor | 0.1 | 0.1 | 0.1 | 0.1 | 0.1 | 0.1 | 0.1 | 0.1 |
| | Water | - | - | - | 20.0 | - | - | - | - |
| | Solvent 1 | 20.0 | 5.0 | - | - | 15.0 | - | - | - |
| | Solvent 2 | - | - | 20.0 | - | - | - | - | - |
| | Wax | 1.0 | 1.0 | 1.0 | 1.0 | 1.0 | 1.0 | 1.0 | 1.0 |
| Evaluation | Viscosity (Pa·s) | 0.9 | 1.5 | 1.7 | 1.2 | 1.6 | 1.7 | 6 | 45 |
| | Tack value | 1.5 | 1.6 | 1.8 | 1.5 | 1.5 | 1.7 | 2.3 | 9.6 |

**[Table 2-1]**

| | | Color ink set 1 | | | | Color ink set 2 | | | |
|---|---|---|---|---|---|---|---|---|---|
| | | Black | Cyan | Magenta | Yellow | Black | Cyan | Magenta | Yellow |
| Composition (% by mass) | Black pigment | 18.0 | - | - | - | 18.0 | - | - | - |
| | Blue pigment | - | 18.0 | - | - | - | 18.0 | - | - |
| | Red pigment | - | - | 16.0 | - | - | - | 16.0 | - |
| | Yellow pigment | - | - | - | 16.0 | - | - | - | 16.0 |
| | Extender pigment | 1.0 | 1.0 | 1.0 | 1.0 | 1.0 | 1.0 | 1.0 | 1.0 |
| | Pigment dispersant | - | - | 1.0 | - | - | - | 1.0 | - |
| | Monomer 1 | 45.0 | 46.0 | 46.2 | 47.0 | 40.0 | 43.0 | 41.2 | 42.0 |
| | Monomer 2 | 21.9 | 21.4 | 21.7 | 21.9 | - | - | - | - |
| | Monomer 3 | - | - | - | - | 26.9 | 23.9 | 26.9 | 27.1 |
| | Monomer 4 | - | - | - | - | - | - | - | - |
| | Oligomer | - | - | - | - | - | - | - | - |
| | Acrylic resin | 13.0 | 12.5 | 13.0 | 13.0 | 13.0 | 13.0 | 12.8 | 12.8 |
| | Polymerization Inhibitor | 0.1 | 0.1 | 0.1 | 0.1 | 0.1 | 0.1 | 0.1 | 0.1 |
| | Water | - | - | - | - | - | - | - | - |
| | Solvent 1 | - | - | - | - | - | - | - | - |
| | Solvent 2 | - | - | - | - | - | - | - | - |
| | Wax | 1.0 | 1.0 | 1.0 | 1.0 | 1.0 | 1.0 | 1.0 | 1.0 |
| Evaluation | Viscosity (Pa·s) | 93 | 99 | 91 | 85 | 77 | 74 | 69 | 62 |
| | Tack value | 9.6 | 9.2 | 9 | 8.5 | 8.3 | 7.9 | 7.5 | 7.2 |

**[Table 2-2]**

| | | Color ink set 3 | | | | Color ink set 4 | | | |
|---|---|---|---|---|---|---|---|---|---|
| | | Black | Cyan | Magenta | Yellow | Black | Cyan | Magenta | Yellow |
| Composition (% by mass) | Black pigment | 20.0 | - | - | - | 20.0 | - | - | - |
| | Blue pigment | - | 20.0 | - | - | - | 20.0 | - | - |
| | Red pigment | - | - | 18.0 | - | - | - | 18.0 | - |
| | Yellow pigment | - | - | - | 18.0 | - | - | - | 18.0 |
| | Extender pigment | - | - | - | - | - | - | - | - |
| | Pigment dispersant | - | - | - | - | - | - | - | - |
| | Monomer 1 | - | - | - | - | - | - | - | - |
| | Monomer 2 | 47.9 | 47.4 | 47.4 | 44.9 | 55.0 | 54.0 | 52.0 | 52.0 |
| | Monomer 3 | - | - | - | - | - | - | - | - |
| | Monomer 4 | 1.0 | - | - | 1.0 | 13.9 | 15.4 | 19.4 | 19.9 |
| | Oligomer | 10.0 | 9.5 | 9.5 | 9.0 | 10.0 | 9.5 | 9.5 | 9.0 |
| | Acrylic resin | - | - | - | - | - | - | - | - |
| | Polymerization Inhibitor | 0.1 | 0.1 | 0.1 | 0.1 | 0.1 | 0.1 | 0.1 | 0.1 |
| | Water | - | - | - | - | - | - | - | - |
| | Solvent 1 | 20.0 | 22.0 | 24.0 | 26.0 | - | - | - | - |
| | Solvent 2 | - | - | - | - | - | - | - | - |
| | Wax | 1.0 | 1.0 | 1.0 | 1.0 | 1.0 | 1.0 | 1.0 | 1.0 |
| Evaluation | Viscosity (Pa·s) | 1.0 | 0.9 | 0.9 | 0.8 | 1.4 | 1.3 | 1.3 | 1.2 |
| | Tack value | 1.4 | 1.6 | 1.5 | 1.6 | 1.6 | 1.5 | 1.7 | 1.6 |

### [Examples 1 to 5 and Comparative Example 1]

The surface printing was respectively performed using the printing method, the white ink and the color ink set shown in Table 3, and the substrate 1 (PET film) as a substrate.

In Example 1, by performing the inter-cylinder drying of the white ink (A), peeling did not occur even in the post-printing high-viscosity offset ink, and favorable printability was exhibited. The density of the color ink was stable even at the time of continuous printing.

In Example 2 in which the amount of the solvent in the ink (A) was smaller and Example 3 in which the boiling point of the solvent in the ink (A) was higher than that in Example 1, the white ink thickening after drying was small, and printability was "B".

Also in Example 4 in which water was used instead of the solvent in the ink (A) with respect to Example 1, favorable printability and continuous printing stability were exhibited.

In Example 5 using the monomer including an alicyclic skeleton, in addition to favorable printability and continuous printing stability, improvement in adhesion and abrasion resistance of the printed material was also observed.

In Comparative Example 1 in which the ink (A) was also used for the color ink, favorable printability was exhibited in all colors by performing inter-cylinder drying in each color, but variation in density at the time of continuous printing was large, and printing stability was insufficient.

The printing conditions and evaluation results are shown in Table 3.

### [Comparative Examples 2 to 4]

The surface printing was performed using the printing method 2 of the completely wet-on-wet process, the white ink and the color ink set shown in Table 3, and the substrate 1 (PET film) as a substrate.

In Comparative Example 2, only the flexo type ink (B) including white ink was used. In Comparative Example 2, white ink or pre-printing color ink was taken on the back cylinder, color mixing occurred, the color ink was not applied, and normal printing could not be performed.

In Comparative Examples 3 and 4, only the offset type ink (B) including white ink was used. In Comparative Example 3, white ink was taken on the back cylinder, and color mixing occurred. In addition, the color ink was not applied, and normal printing could not be performed. In Comparative Example 4, wet-on-wet printability and density stability were "A", but the leveling property of the white ink was poor, and the opacity was insufficient.

The printing conditions and evaluation results are shown in Table 3.

**[Table 3-1]**

| | Example 1 | Example 2 | Example 3 | Example 4 | Example 5 |
|---|---|---|---|---|---|
| Printing method | 1 | 1 | 1 | 1 | 1 |
| White ink | 1 | 2 | 3 | 4 | 5 |
| Color ink set | 1 | 1 | 1 | 1 | 2 |
| Substrate | 1 | 1 | 1 | 1 | 1 |
| Printability | A | B | B | A | A |
| Opacity (%) | 60 | 60 | 59 | 60 | 61 |
| Density stability | A | B | B | A | A |
| Removability | B | B | B | B | A |
| Scratch resistance | A | A | B | A | A |

**[Table 3-2]**

| | Comparative Example 1 | Comparative Example 2 | Comparative Example 3 | Comparative Example 4 |
|---|---|---|---|---|
| Printing method | 2 | 3 | 4 | 4 |
| White ink | 1 | 6 | 7 | 8 |
| Color ink set | 3 | 4 | 2 | 2 |
| Substrate | 1 | 1 | 1 | 1 |
| Printability | A | C | C | A |
| Opacity (%) | 61 | 60 | 52 | 43 |
| Density stability | C | - | - | A |
| Removability | B | - | - | A |
| Scratch resistance | A | - | - | A |

### [Example 7]

The surface printing was performed in the same manner as in Example 5, except that the substrate was changed to the substrate 2 (PE film). Even when the substrate was changed, printability, opacity, and density stability were favorable. There was no peeling-off or peeling due to abrasion, which was favorable. The results are shown in Table 4.

### [Example 8]

The surface printing was performed using the printing method 5, EB varnish as an overprint varnish, the white ink 1, the color ink set 1, and the substrate 3 (OPP film) as a substrate. Similarly to Example 1 using the printing method 1, printability and opacity were favorable, and the density of the color ink was stable. By applying the overprint varnish, there was no peeling-off or peeling due to abrasion, which was favorable. The results are shown in Table 4.

**[Table 4]**

| | Example 7 | Example 8 |
|---|---|---|
| Printing method | 1 | 5 |
| White ink | 5 | 1 |
| Color ink set | 2 | 1 |
| Substrate | 2 | 3 |
| Printability | A | A |
| Opacity (%) | 60 | 62 |
| Density stability | A | A |
| Removability | A | A |
| Scratch resistance | A | A |

## Claims

1. A method for producing a printed material, comprising, in the stated order:
an ink (A) transfer step of transferring an ink (A) according to the following definition to a substrate, the ink (A) being colorless or white;
a drying step of evaporating water or a solvent contained in the ink (A);
an ink (B) transfer step of transferring an ink (B) according to the following definition to the substrate; and
an irradiation step of irradiating the transferred inks with an active energy ray:
the ink (A) being a volatile active energy ray-curable ink containing water or a solvent,
the ink (B) being a nonvolatile active energy ray-curable ink substantially not containing water or a solvent.

2. The method for producing a printed material according to claim 1, wherein a viscosity of the ink (A) at 25°C and a rotation speed of 0.5 rpm is 0.1 Pa·s or more and 5 Pa·s or less, and a viscosity of the ink (B) at 25°C and a rotation speed of 0.5 rpm is 20 Pa·s or more and 200 Pa·s or less.

3. The method for producing a printed material according to claim 1 or 2, wherein the ink (A) is a flexo ink.

4. The method for producing a printed material according to any one of claims 1 to 3, wherein the ink (B) is an offset ink.

5. The method for producing a printed material according to any one of claims 1 to 4, wherein the ink (A) contains water or a solvent having a boiling point at 1 atm of 150°C or less.

6. The method for producing a printed material according to any one of claims 1 to 5, wherein a content of the water and/or the solvent in the ink (A) is 10% by mass or more and 50% by mass or less in total of the water and the solvent.

7. The method for producing a printed material according to any one of claims 1 to 6, wherein the ink (A) and/or the ink (B) contains a (meth)acrylate having an alicyclic skeleton.

8. The method for producing a printed material according to claim 7, wherein the alicyclic skeleton is any one or more selected from a norbornane skeleton, an adamantane skeleton, a tricyclodecane skeleton, and a dicyclopentadiene skeleton.

9. The method for producing a printed material according to any one of claims 1 to 8, wherein the ink (A) and/or the ink (B) contains wax.

10. The method for producing a printed material according to any one of claims 1 to 9, wherein the substrate is a non-absorbent material.

11. The method for producing a printed material according to any one of claims 1 to 10, wherein a thickness of the substrate is 5 um or more and 50 um or less.

12. The method for producing a printed material according to any one of claims 1 to 11, which uses a central drum type printing machine.

13. The method for producing a printed material according to any one of claims 1 to 12, further comprising an overprint varnish transfer step of transferring an active energy ray-curable overprint varnish to the substrate to which the ink (A) and the ink (B) have been transferred, between the ink (B) transfer step and the irradiation step.

14. The method for producing a printed material according to any one of claims 1 to 13, wherein the substrate is a single type of polyethylene or polypropylene, or a laminate thereof.
